(19) Europäisches Patentamt
European Patent Office
Office européen des brevets

(11) **EP 3 353 215 B1**

(12) **EUROPEAN PATENT SPECIFICATION**

(45) Date of publication and mention
of the grant of the patent:
**24.07.2019 Bulletin 2019/30**

(51) Int Cl.:
**C08B 13/00** *(2006.01)*

(21) Application number: **16775423.3**

(86) International application number:
**PCT/US2016/052739**

(22) Date of filing: **21.09.2016**

(87) International publication number:
**WO 2017/053337 (30.03.2017 Gazette 2017/13)**

(54) **PROCESS FOR PREPARING AN ESTER OF A CELLULOSE ETHER IN THE PRESENCE OF ACETIC ACID AND A REACTION CATALYST**

PROZESS ZUR HERSTELLUNG EINES ESTERS AUS EINEM ZELLULOSEETHER IN GEGENWART VON ESSIGSÄURE UND EINES REAKTIONSKATALYSATORS

PROCÉDÉ DE PRÉPARATION D'ESTER D'UNE ÉTHER DE CELLULOSE EN PRÉSENCE D'ACIDE ACÉTIQUE ET UNE CATALYSEUR DE RÉACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2015 US 201562232093 P**

(43) Date of publication of application:
**01.08.2018 Bulletin 2018/31**

(73) Proprietor: **Dow Global Technologies LLC
Midland, MI 48674 (US)**

(72) Inventor: **APPELL, Robert B.
Midland, MI 48674 (US)**

(74) Representative: **f & e patent
Braunsberger Feld 29
51429 Bergisch Gladbach (DE)**

(56) References cited:
**WO-A1-2014/031447    WO-A1-2014/031448**

**Description**

FIELD

The present invention relates to an improved process for preparing an ester of a cellulose ether.

INTRODUCTION

Esters of cellulose ethers, their uses and processes for preparing them are generally known in the art. Various known esters of cellulose ethers are useful as enteric polymers for pharmaceutical dosage forms, such as methylcellulose phthalate, hydroxypropyl methylcellulose phthalate, methylcellulose succinate, or hydroxypropyl methylcellulose acetate succinate. Enteric polymers are those that are resistant to dissolution in the acidic environment of the stomach. Dosage forms coated with such polymers protect the drug from inactivation or degradation in the acidic environment or prevent irritation of the stomach by the drug.

U.S. Patent No. 4,226,981 and the published International patent applications WO_2014/031447 and WO_2014/031448 disclose a process for preparing mixed esters of cellulose ethers, such as hydroxypropyl methyl cellulose acetate succinate (HPMCAS), by esterifying hydroxypropyl methylcellulose with succinic anhydride and acetic anhydride in the presence of an alkali carboxylate, such as sodium acetate, as the esterification catalyst and acetic acid as the reaction medium.

Typically glacial acetic acid, acetic anhydride, a hydroxypropyl methylcellulose (HPMC), succinic anhydride and sodium acetate are simply mixed and the reaction mixture is heated to 60 °C to 110 °C to effect the esterification reaction. Acetic acid as reaction medium and sodium acetate as reaction catalyst is a widely used reaction system due to its well-known advantages, such as low cost, solubility of the reactants in the reaction medium, and minimal formation of by-products. However, the use of acetic acid as reaction medium and sodium acetate as reaction catalyst also has disadvantages. The inventor of the present patent application has found that heat of dissolution is generated when sodium acetate is dissolved in acetic acid. Sodium acetate readily dissolves in acetic acid. Hence, upon addition of sodium acetate to acetic acid the heat of dissolution is typically generated locally at the spots where sodium acetate is added to acetic acid before the sodium acetate can be homogeneously distributed in the reaction medium. Applicants have found that sufficient heat can be generated locally to cause one or more anhydrides to react with the cellulose ether. Excessive heat generation upon addition of sodium acetate can create poorly-controlled temperature excursions, including hot spots in viscous reaction mixtures which are difficult to be mixed. Hot spots in the reaction mixture can cause variability in ester substitution levels and, due to cross-linking reactions, variability in molecular weight of the produced esterified cellulose ether, such as HPMCAS.

Hence, it would be desirable to find a way of minimizing the creation of hot spots in the reaction mixture when esterifying cellulose ethers.

SUMMARY

Surprisingly, it has been found that sodium diacetate is as effective as sodium acetate as reaction catalyst for esterifying cellulose ethers and that much less heat is generated when sodium diacetate is dissolved in acetic acid instead of sodium acetate under comparable conditions.

Accordingly, the present invention relates to a process for preparing an esterified cellulose ether which comprises the step of esterifying a cellulose ether with (i) an aliphatic monocarboxylic acid anhydride or (ii) a dicarboxylic acid anhydride or (iii) a combination of an aliphatic monocarboxylic acid anhydride and a dicarboxylic acid anhydride, wherein the esterification reaction is conducted in the presence of acetic acid and an alkali metal diacetate.

BRIEF DESCRIPTION OF DRAWINGS

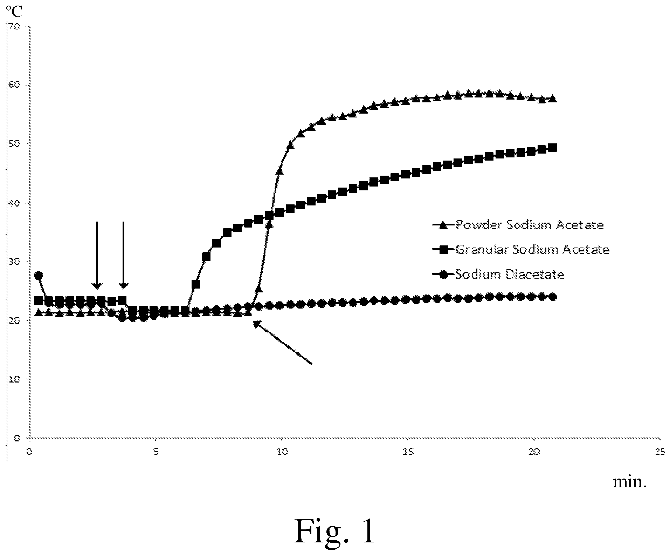

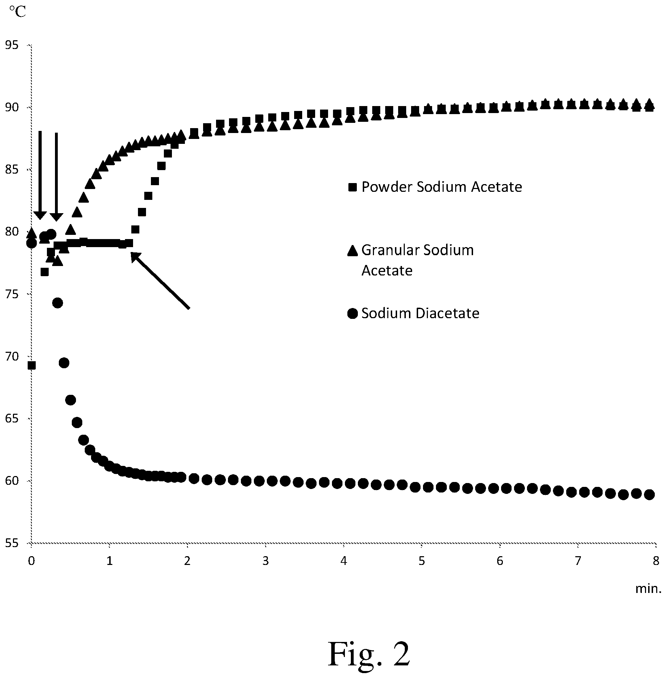

Fig. 1 and 2 represent the results of calometric measurements upon addition of sodium diacetate or sodium acetate to acetic acid.

DESCRIPTION OF EMBODIMENTS

The cellulose ether used as a starting material in the process of the present invention has a cellulose backbone having β-1,4 glycosidically bound D-glucopyranose repeating units, designated as anhydroglucose units in the context of this invention. The cellulose ether used as a starting material in the process of the present invention preferably is an alkyl cellulose, hydroxyalkyl cellulose or hydroxyalkyl alkylcellulose. This means that in the cellulose ether utilized in the process of the present invention, at least a part of the hydroxyl groups of the cellulose backbone of the anhydroglucose units are substituted by alkoxyl groups or hydroxyalkoxyl groups or a combination of alkoxyl and hydroxyalkoxyl groups. The hydroxyalkoxyl groups are typically hydroxymethoxyl, hydroxyethoxyl and/or hydroxypropoxyl groups. Hydroxyethoxyl and/or hydroxypropoxyl groups are preferred. Typically one or two kinds of hydroxyalkoxyl groups are present in the cellulose ether. Preferably a single kind of hydroxyalkoxyl group, more preferably hydroxypropoxyl, is present. The alkoxyl groups are typically methoxyl, ethoxyl and/or propoxyl groups. Methoxyl groups are preferred.

Illustrative of the above-defined cellulose ethers are alkylcelluloses, such as methylcellulose, ethylcellulose, and propylcellulose; hydroxyalkylcelluloses, such as hydroxyethylcellulose, hydroxypropylcellulose, and hydroxybutylcellulose; and hydroxyalkyl alkylcelluloses, such as hydroxyethyl methylcellulose, hydroxymethyl ethylcellulose, ethyl hydroxyethylcellulose, hydroxypropyl methylcellulose, hydroxypropyl ethylcellulose, hydroxybutyl methylcellulose, and hydroxybutyl ethylcellulose; and those having two or more hydroxyalkyl groups, such as hydroxyethylhydroxypropyl methylcellulose. Most preferably, the cellulose ether is a hydroxypropyl methylcellulose.

The degree of the substitution of hydroxyl groups of the anhydroglucose units by hydroxyalkoxyl groups is expressed by the molar substitution of hydroxyalkoxyl groups, the MS(hydroxyalkoxyl). The MS(hydroxyalkoxyl) is the average number of moles of hydroxyalkoxyl groups per anhydroglucose unit in the cellulose ether. It is to be understood that during the hydroxyalkylation reaction the hydroxyl group of a hydroxyalkoxyl group bound to the cellulose backbone can be further etherified by an alkylation agent, e.g. a methylation agent, and/or a hydroxyalkylation agent. Multiple subsequent hydroxyalkylation etherification reactions with respect to the same carbon atom position of an anhydroglucose unit yields a side chain, wherein multiple hydroxyalkoxyl groups are covalently bound to each other by ether bonds, each side chain as a whole forming a hydroxyalkoxyl substituent to the cellulose backbone.

The term "hydroxyalkoxyl groups" thus has to be interpreted in the context of the MS(hydroxyalkoxyl) as referring to the hydroxyalkoxyl groups as the constituting units of hydroxyalkoxyl substituents, which either comprise a single hydroxyalkoxyl group or a side chain as outlined above, wherein two or more hydroxyalkoxy units are covalently bound to each other by ether bonding. Within this definition it is not important whether the terminal hydroxyl group of a hydroxyalkoxyl substituent is further alkylated, e.g. methylated, or not; both alkylated and non-alkylated hydroxyalkoxyl substituents are included for the determination of MS(hydroxyalkoxyl). The cellulose ether utilized in the process of the invention generally has a molar substitution of hydroxyalkoxyl groups of at least 0.05, preferably at least 0.08, more preferably at least 0.12, and most preferably at least 0.15. The degree of molar substitution is generally not more than 1.00, preferably not more than 0.90, more preferably not more than 0.70, and most preferably not more than 0.50.

The average number of hydroxyl groups substituted by alkoxyl groups, such as methoxyl groups, per anhydroglucose unit, is designated as the degree of substitution of alkoxyl groups, DS(alkoxyl). In the above-given definition of D S, the term "hydroxyl groups substituted by alkoxyl groups" is to be construed within the present invention to include not only alkylated hydroxyl groups directly bound to the carbon atoms of the cellulose backbone, but also alkylated hydroxyl groups of hydroxyalkoxyl substituents bound to the cellulose backbone. The cellulose ethers used as a starting material in the process of the present invention preferably have a DS(alkoxyl) of at least 1.0, more preferably at least 1.1, even more preferably at least 1.2, most preferably at least 1.4, and particularly at least 1.6. The DS(alkoxyl) is preferably not more than 2.5, more preferably not more than 2.4, even more preferably not more than 2.2, and most not more than 2.05. The degree of substitution of alkoxyl groups and the molar substitution of hydroxyalkoxyl groups can be determined by Zeisel cleavage of the cellulose ether with hydrogen iodide and subsequent quantitative gas chromatographic analysis (G. Bartelmus and R. Ketterer, Z. Anal. Chem., 286 (1977) 161-190). Most preferably the cellulose ether utilized in the process of the invention is hydroxypropyl methylcellulose having a DS(methoxyl) within the ranges indicated above for DS(alkoxyl) and an MS(hydroxypropoxyl) within the ranges indicated above for MS(hydroxyalkoxyl).

The cellulose ether used as a starting material in the process of the present invention preferably has a viscosity of from 1.2 to 200 mPa·s, preferably from 1.8 to 100 mPa·s, more preferably from 2.4 to 50 mPa·s, in particular from 2.5 to 30 mPa·s, measured as a 2.0 % by weight solution in water at 20°C according to Ubbelohde. Cellulose ethers of such viscosity can be obtained by subjecting a cellulose ether of higher viscosity to a partial depolymerization process. Partial depolymerization processes are well known in the art and described, for example, in European Patent Applications EP 1141029; EP 0210917; EP 1423433; and US Patent No. 4,316,982. Alternatively, partial depolymerization can be achieved during the production of the cellulose ethers, for example by the presence of oxygen or an oxidizing agent.

The cellulose ether is reacted with (i) an aliphatic monocarboxylic acid anhydride or (ii) a dicarboxylic acid anhydride or (iii) a combination of an aliphatic monocarboxylic acid anhydride and a dicarboxylic acid anhydride. Preferred aliphatic monocarboxylic acid anhydrides are selected from the group consisting of acetic anhydride, butyric anhydride and propionic anhydride. Acetic anhydride is the most preferred aliphatic monocarboxylic acid anhydride. Preferred dicarboxylic acid anhydrides are selected from the group consisting of succinic anhydride, maleic anhydride and phthalic anhydride. A preferred aliphatic monocarboxylic acid anhydride can be used alone; or a preferred dicarboxylic acid anhydride can be used alone; or a preferred aliphatic monocarboxylic acid anhydride can be used in combination with a preferred dicarboxylic acid anhydride.

If an aliphatic monocarboxylic acid anhydride and a dicarboxylic acid anhydride are used for esterifying the cellulose ether, the two anhydrides may be introduced into the reaction vessel at the same time or separately one after the other. The amount of each anhydride to be introduced into the reaction vessel is determined depending on the desired degree of esterification to be obtained in the final product, usually being 1 to 10 times the stoichiometric amounts of the desired molar degree of substitution of the anhydroglucose units by esterification.

The molar ratio between the anhydride of an aliphatic monocarboxylic acid and the anhydroglucose units of the cellulose ether generally is 0.1 / 1 or more, preferably 0.3 / 1 or more, more preferably 0. 5 / 1 or more, most preferably 1 / 1 or more, and particularly 1.5 / 1 or more. The molar ratio between the anhydride of an aliphatic monocarboxylic acid and the anhydroglucose units of the cellulose ether generally is 17 / 1 or less, preferably 10 / 1 or less, more preferably 8 / 1 or less, most preferably 6 / 1 or less, and particularly 4 / 1 or less.

The molar ratio between the anhydride of a dicarboxylic acid and the anhydroglucose units of cellulose ether preferably is 0.01 / 1 or more, more preferably 0.04 / 1 or more, and most preferably 0.2 / 1 or more. The molar ratio between the anhydride of a dicarboxylic acid and the anhydroglucose units of cellulose ether preferably is 2.5 / 1 or less, more preferably 1.5 / 1 or less, and most preferably 1 / 1 or less.

The molar number of anhydroglucose units of the cellulose ether utilized in the process of the present invention can be determined from the weight of the cellulose ether used as a starting material, by calculating the average molecular weight of the substituted anhydroglucose units from the DS(alkoxyl) and MS(hydroxyalkoxyl).

The esterification reaction is conducted in the presence of an alkali metal diacetate as esterification catalyst, such as sodium diacetate or potassium diacetate. Sodium diacetate has the chemical formula $NaH(C_2H_3O_2)_2$. The amount of the alkali metal diacetate is generally 20 to 200 parts by weight of alkali metal diacetate per 100 parts by weight of the cellulose ether. The molar ratio [alkali metal diacetate / anhydroglucose units of cellulose ether] is typically at least 0.3 : 1, preferably at least 0.4 : 1, more preferably at least 1.0 : 1, even more preferably at least 1.5 : 1, and most preferably at least 1.9 : 1. The molar ratio [alkali metal diacetate / anhydroglucose units of cellulose ether] is generally is up to 10 : 1, preferably up to 5 : 1, more preferably up to 3.8 : 1, even more preferably up to 3.5 : 1, and most preferably up to 3.0 : 1. Upon dissolution of the alkali metal diacetate in the reaction mixture, equal molar amounts of alkali metal acetate and acetic acid are formed.

The esterification of the cellulose ether is conducted in the presence of acetic acid. Acetic acid serves as a reaction diluent. The reaction diluent can comprise minor amounts of other solvents or diluents which are liquid at room temperature and do not react with the cellulose ether, such as aromatic or aliphatic solvents like benzene, toluene, 1,4-dioxane, or tetrahydrofurane; or halogenated $C_1$-$C_3$ derivatives, like dichloro methane or dichloro methyl ether, but the amount of the acetic acid should generally be more than 50 percent, preferably at least 75 percent, and more preferably at least 90 percent, based on the total weight of the reaction diluent. Most preferably the reaction diluent consists of acetic acid.

The molar ratio [acetic acid / anhydroglucose units of cellulose ether] generally is at least 0.7 : 1, preferably at least 1.2 : 1, more preferably at least 1.5 : 1, even more preferably at least 2 : 1 and most preferably at least 3 : 1. The molar ratio [acetic acid / anhydroglucose units of cellulose ether] generally is up to 70 : 1, preferably up to 60 : 1, more preferably up to 20 : 1, even more preferably up to 15 : 1, and most preferably up to 12 : 1. These molar ratios relate to the amount of acetic acid after the addition of the alkali metal diacetate to the reaction mixture, i.e., they include the amount of acetic acid that is formed in the reaction mixture upon addition of alkali metal diacetate.

The reaction mixture is generally heated at 60 °C to 110 °C, preferably at 70 to 100 °C, for a period of time sufficient to complete the reaction, that is, typically from 2 to 25 hours, more typically from 2 to 8 hours. The cellulose ether as the starting material is not always soluble in the acetic acid, but can only be dispersed in or swollen by the acetic acid, especially when the degree of substitution in the cellulose ether is relatively small. The esterification reaction can take place even with such dispersed or swollen cellulose ether and, as the esterification reaction proceeds, the cellulose ether under reaction generally dissolves in the acetic acid, to finally give a homogeneous reaction mixture.

After completion of the esterification reaction, the reaction product can be precipitated from the reaction mixture in a known manner, for example by contacting the reaction mixture with a large volume of water, such as described in U.S. Patent No. 4,226,981, International Patent Application WO 2005/115330 or European Patent Application EP 0 219 426. In a preferred embodiment of the invention the reaction product is precipitated from the reaction mixture as described in International Patent Application PCT/US13/030394, published as WO2013/148154, to produce an esterified cellulose ether in the form of a powder.

According to the process of the present invention an esterified cellulose ether is produced that has (i) aliphatic monovalent acyl groups and/or (ii) groups of the formula -C(O)-R-COOA, wherein R is a divalent aliphatic or aromatic hydrocarbon group and A is hydrogen or a cation. The cation preferably is an ammonium cation, such as $NH_4^+$ or an alkali metal ion, such as the sodium or potassium ion, more preferably the sodium ion. Most preferably, A is hydrogen. The aliphatic monovalent acyl groups are preferably selected from the group consisting of acetyl, propionyl, and butyryl, such as n-butyryl or i-butyryl.

Preferred groups of the formula -C(O)-R-COOA are -C(O)-$CH_2$-$CH_2$-COOA, such as -C(O)-$CH_2$-$CH_2$-COOH or -C(O)-$CH_2$-$CH_2$-COO$^-$Na$^+$, -C(O)-CH=CH-COOA, such as -C(O)-CH=CH-COOH or -C(O)-CH=CH-COO$^-$Na$^+$, or -C(O)-$C_6H_4$-COOA, such as -C(O)-$C_6H_4$-COOH or -C(O)-$C_6H_4$-COO$^-$Na$^+$. In the groups of formula -C(O)-$C_6H_4$-COOA

the carbonyl group and the carboxylic group are preferably arranged in ortho-positions.

Preferred esterified cellulose ethers are

i) HPMCXY and HPMCX, wherein HPMC is hydroxypropyl methyl cellulose, X is A (acetate), or X is B (butyrate) or X is Pr (propionate) and Y is S (succinate), or Y is P (phthalate) or Y is M (maleate), such as hydroxypropyl methyl cellulose acetate phthalate (HPMCAP), hydroxypropyl methyl cellulose acetate maleate (HPMCAM), hydroxypropyl methylcellulose acetate succinate (HPMCAS), or hydroxypropyl methyl cellulose acetate (HPMCA); or

ii) hydroxypropyl methyl cellulose phthalate (HPMCP); hydroxypropyl cellulose acetate succinate (HPCAS), hydroxybutyl methyl cellulose propionate succinate (HBMCPrS), hydroxyethyl hydroxypropyl cellulose propionate succinate (HEHPCPrS); and methyl cellulose acetate succinate (MCAS).

Hydroxypropyl methylcellulose acetate succinate (HPMCAS) is the most preferred esterified cellulose ether.

The esterified cellulose ethers have a DS(methoxyl) and an MS(hydroxyalkoxyl) as indicated further above. The esterified cellulose ethers produced according to the process of the present invention have a degree of substitution of aliphatic monovalent acyl groups, such as acetyl, propionyl, or butyryl groups, of 0 (zero) or preferably at least 0.05, more preferably at least 0.10, most preferably at least 0.15, and particularly at least 0.20. The degree of substitution of aliphatic monovalent acyl groups is generally up to 1.75, preferably up to 1.50, more preferably up to 1.25, and most preferably up to 1.00. The esterified cellulose ethers have a degree of substitution of groups of formula -C(O) - R - COOA, such as succinoyl, of 0 (zero) or preferably at least 0.05, more preferably at least 0.10. The degree of substitution of groups of formula -C(O) - R - COOA, such as succinoyl, is generally up to 1.6, preferably up to 1.30, more preferably up to 1.00, most preferably up to 0.70, and particularly up to 0.60. The sum of i) the degree of substitution of aliphatic monovalent acyl groups and ii) the degree of substitution of groups of formula - C(O) - R - COOA is greater than 0. It is generally at least 0.10, preferably at least 0.20, more preferably at least 0.30, and most preferably at least 0.40. This sum is generally up to 1.9, preferably up to 1.55, more preferably up to 1.15, and particularly up to 1.00.

The content of the acetate and succinate ester groups is determined according to "Hypromellose Acetate Succinate, United States Pharmacopia and National Formulary, NF 29, pp. 1548-1550". Reported values are corrected for volatiles (determined as described in section "loss on drying" in the above HPMCAS monograph). The method may be used in analogue manner to determine the content of propionyl, butyryl, phthalyl and other ester groups.

The content of ether groups in the esterified cellulose ether is determined in the same manner as described for "Hypromellose", United States Pharmacopeia and National Formulary, USP 35, pp 3467-3469.

The contents of ether and ester groups obtained by the above analyses are converted to DS and MS values of individual substituents according to the formulas below. The formulas may be used in analogue manner to determine the DS and MS of substituents of other cellulose ether esters.

$$
\begin{aligned}
\% \text{ cellulose backbone} \\
= 100 - \left( \%\text{MeO} * \frac{\text{M}(\text{OCH}_3) - \text{M}(\text{OH})}{\text{M}(\text{OCH}_3)} \right) \\
- \left( \%\text{HPO} * \frac{\text{M}(\text{OCH}_2\text{CH}(\text{OH})\text{CH}_3) - \text{M}(\text{OH})}{\text{M}(\text{OCH}_2\text{CH}(\text{OH})\text{CH}_3)} \right) \\
- \left( \%\text{Acetyl} * \frac{\text{M}(\text{COCH}_3) - \text{M}(\text{H})}{\text{M}(\text{COCH}_3)} \right) \\
- \left( \%\text{Succinoyl} * \frac{\text{M}(\text{COC}_2\text{H}_4\text{COOH}) - \text{M}(\text{H})}{\text{M}(\text{COC}_2\text{H}_4\text{COOH})} \right)
\end{aligned}
$$

$$
\text{DS(Me)} = \frac{\dfrac{\%\text{MeO}}{\text{M}(\text{OCH}_3)}}{\dfrac{\%\text{cellulose backbone}}{\text{M}(\text{AGU})}}
\qquad
\text{MS(HP)} = \frac{\dfrac{\%\text{HPO}}{\text{M}(\text{HPO})}}{\dfrac{\%\text{cellulose backbone}}{\text{M}(\text{AGU})}}
$$

$$
\text{DS(Acetyl)} = \frac{\dfrac{\%\text{Acetyl}}{\text{M}(\text{Acetyl})}}{\dfrac{\%\text{cellulose backbone}}{\text{M}(\text{AGU})}}
\qquad
\text{DS(Succinoyl)} = \frac{\dfrac{\%\text{Succinoyl}}{\text{M}(\text{Succinoyl})}}{\dfrac{\%\text{cellulose backbone}}{\text{M}(\text{AGU})}}
$$

M(MeO) = M(OCH$_3$) = 31.03 Da M(HPO) = M(OCH$_2$CH(OH)CH$_3$) = 75.09 Da M(Acetyl) = M(COCH$_3$) = 43.04 Da M(Succinoyl) = M(COC$_2$H$_4$COOH) = 101.08 Da M(AGU) = 162.14 Da M(OH) = 17.008 Da M(H) = 1.008 Da

By convention, the weight percent is an average weight percentage based on the total weight of the cellulose repeat unit, including all substituents. The content of the methoxyl group is reported based on the mass of the methoxyl group (i.e., -OCH$_3$). The content of the hydroxyalkoxyl group is reported based on the mass of the hydroxyalkoxyl group (i.e., O-alkylene-OH); such as hydroxypropoxyl (i.e., -O-CH$_2$CH(CH$_3$)-OH). The content of the aliphatic monovalent acyl groups is reported based on the mass of -C(O) - R$_1$ wherein R$_1$ is a monovalent aliphatic group, such as acetyl (-C(O)-CH$_3$). The content of the group of formula -C(O) - R - COOH is based on the mass of this group, such as the mass of succinoyl groups (i.e., -C(O)-CH$_2$-CH$_2$-COOH).

The esterified cellulose ethers generally have a viscosity of up to 200 mPa·s, preferably up to 100 mPa·s, more preferably up to 50 mPa·s, even more preferably up to 30 mPa·s, most preferably up to 10 mPa·s, and particularly up to 5 mPa·s, measured as a 2.0 wt.-% solution of the esterified cellulose ether in 0.43 wt.-% aqueous NaOH at 20 °C. Generally the viscosity is at least 1.2 mPa·s, typically at least 1.8 mPa·s, and more typically at least 2.4 mPa·s, measured as a 2.0 wt.-% solution of the esterified cellulose ether in 0.43 wt.-% aqueous NaOH at 20 °C. The 2.0 % by weight solution of the esterified cellulose ether is prepared as described in"Hypromellose Acetate Succinate, United States Pharmacopia and National Formulary, NF 29, pp. 1548-1550", followed by an Ubbelohde viscosity measurement according to DIN 51562-1:1999-01 (January 1999).

Some embodiments of the invention will now be described in detail in the following Examples.

EXAMPLES

Unless otherwise mentioned, all parts and percentages are by weight. In the Examples the following test procedures are used.

Viscosity of Hydroxypropyl Methyl Cellulose (HPMC) samples

The viscosity of the HPMC samples was measured as a 2.0 % by weight solution in water at 20°C ± 0.1 °C. The 2.0 % by weight HPMC solution in water was prepared according to United States Pharmacopeia (USP 35, "Hypromellose", pages 3467-3469), followed by an Ubbelohde viscosity measurement according to DIN 51562-1:1999-01 (January 1999).

Viscosity of Hydroxypropyl Methyl Cellulose Acetate Succinate (HPMCAS)

The 2.0 % by weight solution of the HPMCAS in 0.43 wt.-% aqueous NaOH was prepared as described in"Hypromellose Acetate Succinate, United States Pharmacopia and National Formulary, NF 29, pp. 1548-1550", followed by an Ubbelohde viscosity measurement at 20 °C according to DIN 51562-1:1999-01 (January 1999).

Content of ether and ester groups of HPMCAS and HPMCP

The content of ether groups in the HPMCAS and HPMCP was determined in the same manner as described for "Hypromellose", United States Pharmacopeia and National Formulary, USP 35, pp 3467-3469.

The ester substitution with acetyl groups (-CO-CH$_3$), the ester substitution with succinoyl groups (-CO-CH$_2$-CH$_2$-COOH) and the ester substitution with phthalyl groups (-CO-C$_6$H$_4$-COOH) were determined according to Hypromellose Acetate Succinate, United States Pharmacopia and National Formulary, NF 29, pp. 1548-1550". Reported values for ester substitution were corrected for volatiles (determined as described in section "loss on drying" in the above HPMCAS monograph).

Production of Hydroxypropyl Methyl Cellulose Acetate Succinate (HPMCAS)

Comparative Example A

Glacial acetic acid (885.2 g), solid succinic anhydride (84.6 g) and acetic anhydride (371.4 g) were added to a 1-gallon (3.8 liter) glass jacketed reactor fitted with an Ekato style wall scraper/impeller dual agitator. This slurry was heated to about 50 °C with stirring at which point solid sodium acetate in powder form ("fine sodium acetate", 435.5 g) and HPMC (500.8 g, calculated on the dried basis) were added. The funnel used to add the reactants and the reactor walls were washed with glacial acetic acid (230.0 g). Therefore, the resulting total weight of glacial acetic acid in the reaction mixture was 1115.2 g. The HPMC had a degree of substitution with methoxyl groups, DS$_M$, of 1.90, a molar substitution with hydroxypropoxyl groups, MS$_{HP}$, of 0.24 and a viscosity of about 3 mPa·s, measured as a 2 % solution in water at 20 °C. The HPMC is commercially available from The Dow Chemical Company as Methocel E3 LV Premium cellulose ether.

The slurry was heated with stirring to 88 °C. The thin slurry was stirred at this temperature for 3 hours. The reaction mixture was then quenched by addition of water (1000 g) over 0.2 hours. A portion of the quenched reaction mixture was precipitated in excess water with high shear. The isolated wet cake was washed with fresh water and then dried at 60 °C to give the solid HPMCAS.

Comparative Example B

The procedure in Comparative Example A was repeated, except that granular sodium acetate was used instead of fine sodium acetate and some amounts of the reactants were slightly different, as listed in Table 1 below.

Example 1

The procedure in Comparative Example A was repeated, except that the initial amount of glacial acetic acid was 645.0 g instead of 885.2 g and that sodium diacetate powder ("fine sodium diacetate") was used instead of fine sodium acetate. As sodium diacetate has equal molar amounts of sodium acetate and acetic acid, the initial glacial acetic acid loading was chosen that the final reaction mixture had the same acetic acid level as in Comparative Examples A and B.

The funnel used to add the reactants and the reactor walls were washed with glacial acetic acid (230.2 g), as in Comparative Example A. Minor deviations in the weight of reactants are listed in Table 1 below. The solid HPMCAS was achieved as in Comparative Examples A and B.

Example 2

The procedure in Comparative Example A was repeated, except that sodium diacetate powder ("fine sodium diacetate") was used instead of fine sodium acetate.

Comparative Calorimetry I

Three equal samples of glacial acetic acid, each having a volume of 240 ml (250 g), were equilibrated at 22 °C in insulated, covered beakers stirred with a mechanical stirrer. To the first beaker 100 g of fine sodium diacetate was added, to the second beaker 100 g of fine sodium acetate was added, and to the third beaker 100 g of granular sodium acetate was added.

The temperatures of the glacial acetic acid vs. time upon addition of fine sodium diacetate, fine sodium acetate (powder sodium acetate) and granular sodium acetate to the individual beakers are illustrated in Fig. 1. The arrows in Fig. 1 show the points of addition of fine sodium diacetate, fine sodium acetate and granular sodium acetate. As illustrated by Fig. 1, a sharp temperature increase results upon addition of fine sodium acetate or granular sodium acetate. In contrast thereto, upon addition of sodium diacetate hardly any temperature increase is observed.

Comparative Calorimetry II

Comparative Calorimetry I is repeated, except that three equal volumes of glacial acetic acid are equilibrated at 80 °C before the addition of fine sodium diacetate, fine sodium acetate and granular sodium acetate. The temperature of the glacial acetic acid vs. time upon addition of fine sodium diacetate, fine sodium acetate and granular sodium acetate to the individual beakers are illustrated in Fig. 2. The arrows in Fig. 2 show the points of addition of fine sodium diacetate, granular sodium acetate and fine sodium acetate. As illustrated by Fig. 2, a significant temperature increase results upon addition of fine sodium acetate or granular sodium acetate. In contrast thereto, upon addition of sodium diacetate even a temperature decrease is observed.

In reaction mixtures for esterifying cellulose ethers, such as HPMCAS production, the heat generation upon sodium acetate addition to acetic acid, as illustrated by Fig. 1 and 2, can lead to poorly-controlled temperature excursions, including hot spots in viscous reaction mixtures which are difficult to be mixed. Local hot spots locally accelerate the esterification reaction, which can cause variability in ester substitution levels and, due to cross-linking reactions, variability in molecular weight of the produced esterified cellulose ether. Increased cross-linking can lead to insoluble particles in the HPMCAS product.

The results illustrated by Fig. 1 and 2 show that addition of an alkali metal diacetate, such as sodium diacetate, to acetic acid does not lead to hot spots in the reaction mixtures for esterifying cellulose ethers. Depending on the initial temperature of acetic acid, only a modest temperature increase or even a temperature decrease is observed upon addition of sodium diacetate. The temperature decrease does not cause variability in ester substitution levels because local over-reactions are avoided and slight cooling can be adjusted for by slight increase in the reaction times without adverse impact on product quality.

The results in Tables 1 and 2 below illustrate that an esterified cellulose ether, such as HPMCAS, can be produced by using an alkali metal diacetate as a catalyst in the same manner as an alkali metal acetate. It should be noted that the ester substitutions listed in Table 2 are average substitutions. The effect of local hot spots is not recognizable from the listed ester substitutions.

Moreover, the inventor of the present patent application has found that sodium diacetate is more storage stable than sodium acetate. When sodium acetate powder was stored in the open air over three days, it gained over 50 % weight as absorbed moisture, became crusty in appearance, and lost its flowability. No weight gain was observed for sodium diacetate. It stayed as free-flowing powder even when it was stored in the open air over three days. This facilitated the process of the present invention.

Table 1

| (Comp.) Example | HPMC | | acetic acid | | Succinic anhydride | | Acetic anhydride | | Catalyst type | Catalyst amount | |
|---|---|---|---|---|---|---|---|---|---|---|---|
| | g | mol | g | mol/mol HPMC | g | mol/mol HPMC | g | mol/mol HPMC | | g | mol/mol HPMC |
| A | 500.8 | 2.64 | 1115.2 | 7.04 | 84.6 | 0.33 | 371.4 | 1.38 | Fine sodium acetate | 435.5 | 2.01 |
| B | 500.8 | 2.64 | 1115.3 | 7.04 | 84.6 | 0.33 | 371.2 | 1.38 | Sodium acetate granules | 436.0 | 2.01 |
| 1 | 500.3 | 2.63 | 1193.9* | 7.56 | 84.6 | 0.32 | 373.0 | 1.39 | Sodium diacetate | 753.8.0 | 2.02 |
| 2 | 501.4 | 2.64 | 1116.9* | 7.04 | 84.9 | 0.32 | 373.5 | 1.38 | Sodium diacetate | 753.9 | 2.01 |
| * corresponds to the total amount of i) added acetic acid and ii) acetic acid formed in the reaction mixture upon addition of alkali metal diacetate | | | | | | | | | | | |

Table 2

| (Comparative) Example | Ether Substitution | | Ester substitution | | Ether Substitution | | Ester substitution | |
|---|---|---|---|---|---|---|---|---|
| | Methoxyl (%) | Hydroxypropoxyl (%) | Acetyl (%) | Succinoyl (%) | $DS_M$ | $MS_{HP}$ | $DS_{Ac}$ | $DS_s$ |
| A | 23.4 | 7.3 | 9.9 | 11.3 | 1.94 | 0.25 | 0.59 | 0.29 |
| B | 23.3 | 7.0 | 9.2 | 10.7 | 1.89 | 0.23 | 0.54 | 0.26 |
| 1 | 23.6 | 7.3 | 8.4 | 11.6 | 1.93 | 0.25 | 0.49 | 0.29 |
| 2 | 23.4 | 7.4 | 9.0 | 12.2 | 1.95 | 0.25 | 0.54 | 0.31 |

$DS_M$ = DS(methoxyl): degree of substitution with methoxyl groups
$MS_{HP}$ = MS(hydroxypropoxyl): molar substitution with hydroxypropoxyl groups
$DS_{Ac}$: degree of substitution of acetyl groups;
$DS_s$: degree of substitution of succinoyl groups

Production of Hydroxypropyl Methyl Cellulose Phthalate (HPMCP)

Comparative Example C

Glacial acetic acid (1150.1 g) was added to a 1-gallon (3.8 liter) glass jacketed reactor fitted with an Ekato style wall scraper/impeller dual agitator. This solution was heated to about 45 °C at which point HPMC (215.7 g, calculated on a dried basis), solid phthalic anhydride (368.2 g) and solid sodium acetate in granular form ("granular sodium acetate", 246.3 g) were added. The HPMC had a degree of substitution with methoxyl groups, $DS_M$, of 1.90, a molar substitution with hydroxypropoxyl groups, $MS_{HP}$, of 0.24 and a viscosity of about 3 mPa·s, measured as a 2 % solution in water at 20 °C. The HPMC is commercially available from The Dow Chemical Company as Methocel E3 LV Premium cellulose ether.

The slurry was heated with stirring to 88 °C. The thin slurry was stirred at this temperature for 4 hours. The reaction mixture was then quenched by addition of water (300 g) over 0.2 hours. A portion of the quenched reaction mixture was precipitated in excess water with high shear. The isolated wet cake was washed with fresh water and then dried at 60 °C to give the solid HPMCP.

Example 3

The procedure in Comparative Example C was repeated, except that the initial amount of glacial acetic acid was 972.6 g instead of 1150.1 g and that sodium diacetate powder ("fine sodium diacetate") was used instead of fine sodium acetate. As sodium diacetate has equal molar amounts of sodium acetate and acetic acid, the initial glacial acetic acid loading was chosen that the final reaction mixture had the same acetic acid level as in Comparative Example C.

Minor deviations in the weight of reactants are listed in Table 3 below. The solid HPMCP was achieved as in Comparative Example C.

Table 3

| (Comparative) Example | HPMC | | Acetic acid | | Phthalic anhydride | | Catalyst type | Catalyst amount | |
|---|---|---|---|---|---|---|---|---|---|
| | g | mol | g | mol/mol HPMC | g | mol/mol HPMC | | g | mol/mol HPMC |
| C | 251.7 | 1.33 | 1150.1 | 14.43 | 368.2 | 1.87 | Sodium acetate granules | 246.3 | 2.26 |
| 3 | 251.5 | 1.33 | 1152.0* | 14.47 | 368.7 | 1.88 | Sodium diacetate | 424.5 | 2.25 |

* corresponds to the total amount of i) added acetic acid and ii) acetic acid formed in the reaction mixture upon addition of alkali metal diacetate

Table 4

| (Comparative) Example | Ether Substitution | | Ester substitution | Ether Substitution | | Ester substitution |
|---|---|---|---|---|---|---|
| | Methoxyl (%) | Hydroxypropoxyl (%) | Phthalyl (%) | $DS_M$ | $MS_{HP}$ | $DS_{Ph}$ |
| C | 19.6 | 6.3 | 33.5 | 1.93 | 0.26 | 0.69 |
| 3 | 20.1 | 6.5 | 31.4 | 1.92 | 0.26 | 0.62 |
| $DS_M$ = DS(methoxyl): degree of substitution with methoxyl groups $MS_{HP}$ = MS(hydroxypropoxyl): molar substitution with hydroxypropoxyl groups $DS_{Ph}$: degree of substitution of phthalyl groups | | | | | | |

**Claims**

1. A process for preparing an esterified cellulose ether comprising the step of esterifying a cellulose ether with (i) an aliphatic monocarboxylic acid anhydride or (ii) a dicarboxylic acid anhydride or (iii) a combination of an aliphatic monocarboxylic acid anhydride and a dicarboxylic acid anhydride, wherein the esterification reaction is conducted in the presence of acetic acid and an alkali metal diacetate.

2. The process of claim 1 wherein the alkali metal diacetate is sodium diacetate.

3. The process of claim 1 or 2 wherein the molar ratio [acetic acid / anhydroglucose units of cellulose ether] is from [1.2 : 1] to [20 : 1].

4. The process of claim 3 wherein the molar ratio [acetic acid/ anhydroglucose units of cellulose ether] is from [1.5 : 1] to [12 : 1].

5. The process of any one of Claims 1 to 4 wherein the molar ratio [alkali metal diacetate / anhydroglucose units of cellulose ether] is from [0.4 : 1] to [5 : 1].

6. The process of Claim 5 wherein the molar ratio [alkali metal diacetate / anhydroglucose units of cellulose ether] is from [1.0 : 1] to [3.8 : 1].

7. The process of any one of claims 1 to 6 wherein the cellulose ether has a viscosity of from 1.8 to 100 mPa·s, measured as a 2.0 % by weight solution in water at 20°C according to Ubbelohde.

8. The process of any one of claims 1 to 7 wherein the cellulose ether is an alkyl cellulose, a hydroxyalkylcellulose or a hydroxyalkyl alkylcellulose.

9. The process of any one of claims 1 to 8 wherein the aliphatic monocarboxylic acid anhydride is selected from the group consisting of acetic anhydride, butyric anhydride and propionic anhydride and the dicarboxylic acid anhydride is selected from the group consisting of succinic anhydride, maleic anhydride and phthalic anhydride.

10. The process of claim 8 or 9 wherein hydroxypropyl methylcellulose is esterified with succinic anhydride and acetic anhydride to produce hydroxypropyl methyl cellulose acetate succinate.

**Patentansprüche**

1. Verfahren zur Herstellung eines veresterten Celluloseethers, umfassend den Schritt des Veresterns eines Celluloseethers mit (i) einem aliphatischen Monocarbonsäureanhydrid oder (ii) einem Dicarbonsäureanhydrid oder (iii) einer Kombination eines aliphatischen Monocarbonsäureanhydrids und eines Dicarbonsäureanhydrids, wobei die Veresterungsreaktion in Gegenwart von Essigsäure und einem Alkalimetalldiacetat durchgeführt wird.

**2.** Verfahren nach Anspruch 1, wobei das Alkalimetalldiacetat Natriumdiacetat ist.

**3.** Verfahren nach Anspruch 1 oder 2, wobei das molare Verhältnis [Essigsäure / Anhydroglucoseeinheit des Celluloseethers] von [1,2:1] bis [20:1] reicht.

**4.** Verfahren nach Anspruch 3, wobei das molare Verhältnis [Essigsäure / Anhydroglucoseeinheit des Celluloseethers] von [1,5:1] bis [12:1] reicht.

**5.** Verfahren nach einem der Ansprüche 1 bis 4, wobei das molare Verhältnis [Alkalimetalldiacetat / Anhydroglucoseeinheit des Celluloseethers] von [0,4:1] bis [5:1] reicht.

**6.** Verfahren nach Anspruch 5, wobei das molare Verhältnis [Alkalimetalldiacetat / Anhydroglucoseeinheit des Celluloseethers] von [1,0:1] bis [3,8:1] reicht.

**7.** Verfahren nach einem der Ansprüche 1 bis 6, wobei der Celluloseether eine Viskosität von 1,8 bis 100 mPa·s, gemessen als 2,0 gew.-%ige Lösung in Wasser bei 20°C gemäß Ubbelohde, aufweist.

**8.** Verfahren nach einem der Ansprüche 1 bis 7, wobei der Celluloseether eine Alkylcellulose, eine Hydroxyalkylcellulose oder eine Hydroxyalkylalkylcellulose ist.

**9.** Verfahren nach einem der Ansprüche 1 bis 8, wobei das aliphatische Monocarbonsäureanhydrid ausgewählt ist aus der Gruppe bestehend aus Essigsäureanhydrid, Buttersäureanhydrid und Propionsäureanhydrid und das Dicarbonsäureanhydrid ausgewählt ist aus der Gruppe bestehend aus Bernsteinsäureanhydrid, Maleinsäureanhydrid und Phthalsäureanhydrid.

**10.** Verfahren nach Anspruch 8 oder 9, wobei Hydroxypropylmethylcellulose mit Bernsteinsäureanhydrid und Essigsäureanhydrid verestert wird, um Hydroxypropylmethylcelluloseacetatsuccinat herzustellen.

**Revendications**

**1.** Procédé en vue de préparer un éther de cellulose estérifié, qui comprend l'étape consistant à estérifier un éther de cellulose avec (i) un anhydride d'acide monocarboxylique aliphatique, ou (ii) un anhydride d'acide dicarboxylique, ou (iii) une combinaison d'un anhydride d'acide monocarboxylique aliphatique et d'un anhydride d'acide dicarboxylique, la réaction d'estérification étant menée en présence d'acide acétique et d'un diacétate de métal alcalin.

**2.** Procédé selon la revendication 1, dans lequel le diacétate de métal alcalin est du diacétate de sodium.

**3.** Procédé selon la revendication 1 ou la revendication 2, dans lequel le rapport molaire [acide acétique / motifs anhydroglucose d'éther de cellulose] est compris dans l'intervalle allant de [1,2 / 1] à [20 / 1].

**4.** Procédé selon la revendication 3, dans lequel le rapport molaire [acide acétique / motifs anhydroglucose d'éther de cellulose] est compris dans l'intervalle allant de [1,5 / 1] à [12 / 1].

**5.** Procédé selon n'importe laquelle des revendications 1 à 4, dans lequel le rapport molaire [diacétate de métal alcalin / motifs anhydroglucose d'éther de cellulose] est compris dans l'intervalle allant de [0,4 / 1] à [5 / 1].

**6.** Procédé selon la revendication 5, dans lequel le rapport molaire [diacétate de métal alcalin / motifs anhydroglucose d'éther de cellulose] est compris dans l'intervalle allant de [1,0 / 1] à [3,8 / 1].

**7.** Procédé selon n'importe laquelle des revendications 1 à 6, dans lequel l'éther de cellulose présente une viscosité, déterminée par viscosimétrie selon Ubbelohde sur une solution à 2,0 % en poids dans l'eau à une température de 20 °C, valant de 1,8 à 100 mPa·s.

**8.** Procédé selon n'importe laquelle des revendications 1 à 7, dans lequel l'éther de cellulose est une alkylcellulose, une hydroxyalkylcellulose ou une hydroxyalkyl-alkylcellulose.

**9.** Procédé selon n'importe laquelle des revendications 1 à 8, dans lequel l'anhydride d'acide monocarboxylique aliphatique est choisi dans l'ensemble constitué par l'anhydride acétique, l'anhydride butyrique et l'anhydride propionique, et l'anhydride d'acide dicarboxylique est choisi dans l'ensemble constitué par l'anhydride succinique, l'anhydride maléique et l'anhydride phtalique.

10. Procédé selon la revendication 8 ou la revendication 9, dans lequel on estérifie de l'hydroxypropyl-méthylcellulose avec de l'anhydride succinique et de l'anhydride acétique pour produire de l'acétate-succinate d'hydroxypropyl-méthylcellulose.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4226981 A
- WO 2014031447 A
- WO 2014031448 A
- EP 1141029 A
- EP 0210917 A
- EP 1423433 A
- US 4316982 A
- WO 2005115330 A
- EP 0219426 A
- US 13030394 W
- WO 2013148154 A

**Non-patent literature cited in the description**

- **G. BARTELMUS ; R. KETTERER.** *Z. Anal. Chem.,* 1977, vol. 286, 161-190
- *Hypromellose Acetate Succinate, United States Pharmacopia and National Formulary,* vol. 29, 1548-1550
- Hypromellose. United States Pharmacopeia, vol. 35, 3467-3469
- Hypromellose Acetate Succinate. United States Pharmacopia, vol. 29, 1548-1550